# FASCICULE DE BREVET EUROPEEN

(11) **EP 2 343 509 B1**
(45) Date de publication et mention de la délivrance du brevet: **11.03.2015**
(21) Numéro de dépôt: 10195543.3
(22) Date de dépôt: 17.12.2010
(51) Int. Cl.: G01D 5/245

(54) **Codeur incrémental et procédé de détermination d'une valeur de variation de positions stables du codeur**
Inkrementaler Positionsgeber und Verfahren zur Bestimmung des einer der Raststellungen des Gebers entsprechenden Parameterwertes
Incremental encoder and method for determining a parameter value corresponding to one of the indexed positions of the encoder

(30) Priorité: 23.12.2009 FR 0906274
(43) Date de publication de la demande: 13.07.2011
(73) Titulaire: Thales, 92200 Neuilly Sur Seine (FR)
(72) Inventeur: Fazilleau, Grégory, 41100 VENDOME (FR); Guinier, Didier, 37390 NOTRE DAME D'OE (FR)
(74) Mandataire: Collet, Alain

(56) Documents cités:
- DE-A1- 10 126 077
- US-A- 4 461 015

## Description

L'invention concerne un codeur incrémental et un procédé de détermination des signaux binaires représentant des incréments de position relative de deux éléments du codeur, les deux éléments étant mobiles l'un par rapport à l'autre. Ces codeurs, par exemple optiques et angulaires, sont utilisés à la manière de potentiomètres, par exemple pour la commande manuelle d'appareils électroniques sensibles à un paramètre d'entrée pouvant varier en continu ou presque en continu, mais ils sont beaucoup plus fiables que les potentiomètres. Typiquement, dans une application pour des équipements aéronautiques, on peut utiliser un codeur angulaire optique pour indiquer à un calculateur de pilotage automatique une consigne d'altitude ou de vitesse que le pilote choisit en actionnant un bouton de commande qui fait tourner le codeur. La fiabilité du codeur et des informations qu'il délivre est alors un élément essentiel du codeur.

Un codeur angulaire optique est typiquement constitué par un disque portant des marques régulières, ce disque étant actionné en rotation par un bouton de commande (par exemple manuel). Une cellule photoélectrique fixée devant le disque détecte le défilement des marques successives lorsque le bouton de commande fait tourner le disque. Les marques sont typiquement des ouvertures dans un disque opaque, une diode électroluminescente étant placée d'un côté du disque et la cellule photoélectrique étant placée de l'autre côté.

Chaque passage de marque constitue un incrément d'une unité dans le comptage de la rotation du disque. La résolution angulaire est déterminée par le pas angulaire des marques régulièrement disposées sur un tour de disque. Pour détecter à la fois des incréments et des décréments d'angle de rotation lorsqu'on inverse le sens de rotation, on prévoit deux cellules photoélectriques décalées physiquement d'un nombre impair de quart de pas entre elles. Ainsi, les états logiques éclairée/non-éclairée des deux cellules sont codés sur deux bits qui prennent successivement les quatre valeurs suivantes : 00, 01, 11, 10 lorsque le disque tourne dans un sens et les quatre valeurs successives suivantes 00, 10, 11, 01 lorsque le disque tourne dans l'autre, de sorte qu'il est facile de déterminer, non seulement l'apparition d'un incrément de rotation (changement d'état de l'un des bits) mais aussi le sens de rotation (par comparaison entre un état des cellules et l'état immédiatement antérieur).

Ce type de codeur est formé d'un assemblage de pièces mécaniques et de composants optoélectroniques qu'il est délicat de mettre au point. Il est avantageux de réutiliser un même codeur pour plusieurs applications afin de le standardiser et ainsi réduire les coûts de production grâce à des séries plus importantes. Les coûts de développement peuvent par ailleurs être mieux répartis sur un plus grand nombre de codeurs. En standardisant, on rencontre un problème lorsque le nombre de pas du codeur varie d'une application à l'autre. Par exemple, si le codeur permet 48 positions angulaires pour une rotation d'un tour complet, il est possible d'utiliser ce codeur pour une application dans laquelle seulement 12 ou 24 positions sont nécessaires. Sans changer le disque de codage qui conserve 48 incréments binaires, on peut réaliser une simple adaptation mécanique pour définir 12 ou 24 positions angulaires sur lesquelles le codeur peut s'arrêter de façon stable. Dans la succession des codages binaires décrits précédemment on ne va utiliser qu'une valeur sur deux pour un codeur 24 positions et une valeur sur quatre pour un codeur 12 positions. II serait possible de régler chaque codeur d'une série unitairement pour définir les valeurs choisies parmi les quatre valeurs binaires mais cela augmente le coût unitaire d'un codeur.

De plus, prenons l'exemple d'un codeur comprenant deux incréments binaires par positions stables. Si lors de l'allumage du codeur, celui ci est sur une position stable, alors entre cette position initiale et toute autre position stable, il y aura un nombre pair de fronts binaires pour les deux codages. La différence entre le mot courant et le mot d'origine sera donc pair. Une simple division par deux permettra de déterminer de façon certaine une valeur de variation de positions stables. Si par contre, lors de l'allumage du codeur, celui ci n'est pas sur une position stable, alors entre cette position initiale et toute autre position stable, il y aura un nombre impair de fronts binaires pour les deux codages et une simple division par deux ne permettra pas de compter correctement les variations de positions stables notamment lors d'inversion de sens du mouvement du codeur.

Le document DE 101 26 077 A1 décrit un rotacteur présentant des positions de crantage, un codeur incrémental et un circuit permettant de déterminer la variation des positions de crantage du codeur à partir de ses signaux de sortie.

Le document US4461015 A décrit un système de mesure de profondeur avec un codeur incrémental dont les signaux sont divisés par un facteur d'échelle programmable, dépendant du fait si un affichage est désiré en pied ou en mètre.

L'invention vise à faciliter la standardisation d'un codeur dans des applications où le nombre de positions peut varier.

A cet effet, l'invention a pour objet un codeur permettant de compter ou de décompter de façon sure des positions multiples d'un codage binaire de base.

Un autre objet de l'invention est un codeur incrémental dans lequel des positions stables du codeur sont définies par des multiples d'un incrément du codeur. Le codeur calcule une différence entre un mot binaire obtenu pour une position stable courante et un mot binaire obtenu pour une position stable précédente, et calcule la valeur de variation de positions stables en déterminant la partie entière de la division de la différence par le nombre d'incréments entre deux positions stables.

L'invention a encore pour objet un codeur incrémental comprenant un élément mobile et un élément fixe, deux capteurs solidaires de l'élément fixe, une succession de marques solidaires de l'élément mobile pouvant être détectées par les capteurs lors du mouvement de l'élément mobile par rapport à l'élément fixe, des moyens de codage binaire représentant la détection et l'absence de détection des marques par les capteurs, le codage issu d'un capteur étant déphasé par rapport au codage de l'autre capteur, un changement de valeur binaire d'un des codages définissant un pas du codeur, les codages formant un mot binaire, des positions stables du codeur étant définies par des multiples de pas du codeur, et des moyens pour définir une valeur de variation de positions stables du codeur à partir du mot binaire, caractérisé en ce qu'il comprend une mémoire contenant un nombre de pas entre deux positions stables et en ce que les moyens pour définir une position stable courante du codeur, calculent une différence entre un mot binaire obtenu pour une position stable courante et un mot binaire obtenu pour une position stable précédente, et calculent la valeur de variation de positions stables en déterminant la partie entière de la division de la différence par le nombre de pas entre deux positions stables.

Un codeur conforme à l'invention améliore la robustesse de l'information qu'il délivre. L'information sera fiable quelle que soit la position initiale sur laquelle le codeur démarre et quelle que soit la position sur laquelle le codeur s'arrête. Ces positions peuvent être des positions stables ou des positions intermédiaires. Le fait de déterminer la partie entière de la division permet de retenir toujours la position stable immédiatement inférieure à la position d'arrêt. On entend par position inférieure une position dont le mot binaire a une valeur inférieure dans un sens de rotation défini comme positif.

L'invention permet de gérer les inversions de sens de déplacement de l'élément mobile sans position « morte » lors de l'inversion. On entend par position morte, une position stable qui n'est pas prise en compte dans l'information délivrée par le codeur.

L'invention a également pour objet un procédé de détermination d'une valeur de variation de positions stables d'un codeur comprenant un élément mobile et un élément fixe, deux capteurs solidaires de l'élément fixe, une succession de marques solidaires de l'élément mobile pouvant être détectées par les capteurs lors du mouvement de l'élément mobile par rapport à l'élément fixe, des moyens de codage binaire représentant la détection et l'absence de détection des marques par les capteurs, le codage issu d'un capteur étant déphasé par rapport au codage de l'autre capteur, un changement de valeur binaire d'un des codages définissant un pas du codeur, les codages formant un mot binaire, des positions stables du codeur étant définies par des multiples de pas du codeur, caractérisé en ce qu'il consiste à :
- calculer une différence entre un mot binaire obtenu pour une position stable courante et un mot binaire obtenu pour une position stable précédente,
- diviser la différence par le nombre de pas entre deux positions stables.
- déterminer la partie entière du résultat de la division.

L'invention sera mieux comprise et d'autres avantages apparaîtront à la lecture de la description détaillée d'un mode de réalisation donné à titre d'exemple, description illustrée par le dessin joint dans lequel :
la figure 1 représente schématiquement un codeur incrémental conforme à l'invention ;
la figure 2 représente un codage binaire issu de capteurs du codeur ;
la figure 3 représente un organigramme permettant de déterminer une valeur de variation entre deux positions stables du codeur représenté sur la figure 1.

Par souci de clarté, les mêmes éléments porteront les mêmes repères dans les différentes figures.

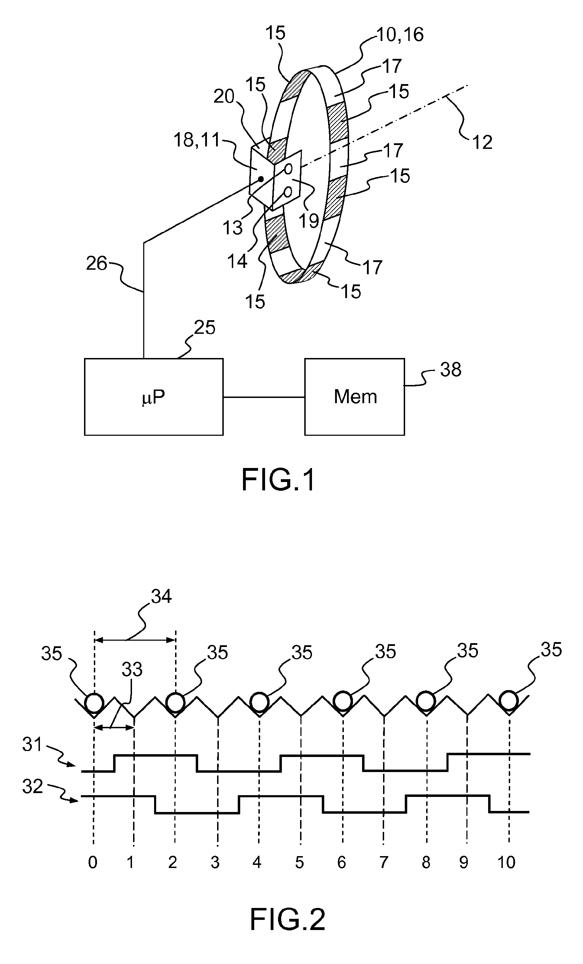

La figure 1 représente un codeur rotatif comprenant un élément mobile 10 par rapport à un élément fixe 11. L'élément mobile 10 est par exemple un bouton qu'un utilisateur peut manoeuvrer en rotation autour d'un axe 12 pour entrer une donnée vers un équipement électronique. L'élément fixe 11 est solidaire d'un boitier du codeur qui peut être fixé dans un équipement électronique. Le codeur permet par exemple à un opérateur de saisir des données utilisées par l'équipement. L'invention est décrite en rapport à un codeur rotatif mais peut tout aussi bien être mise en oeuvre dans un codeur linéaire.

Un codeur rotatif est par exemple utilisé dans un instrument de navigation aérienne embarqué sur la planche de bord d'un aéronef. Au cours d'un vol, le pilote d'un aéronef est amené à régler un altimètre déterminant son altitude par rapport à la pression de l'air entourant l'aéronef. En phase de croisière, l'altitude est donnée par rapport à une pression standard de l'atmosphère et en phase d'approche l'altitude est déterminée par rapport à la pression atmosphérique de l'aéroport de destination. Ce changement de référence barométrique peut être saisi au moyen d'un codeur rotatif selon l'invention.

Certains instruments de navigation embarqués, tel que des instruments de secours, possèdent un écran sur lequel peut être affiché soit des informations de vol tels que l'altitude, la vitesse et l'attitude de l'aéronef soit des paramètres de navigation tel que la route à suivre et des consignes de pilotage automatique de l'aéronef. Comme on l'a vu précédemment, un bouton rotatif situé sur la face avant de l'instrument peut être utilisé pour référencer l'altitude lorsque des paramètres de vol sont affichés. Ce même bouton peut être utilisé pour rentrer des données de navigation telles que par exemple les coordonnées d'un prochain point de passage de l'aéronef. Le bouton rotatif actionne le codeur qui permet de gérer des incréments et des décréments. En d'autres termes, le codeur doit donner une information sur l'angle parcouru par le bouton solidaire de l'élément mobile 10 et sur le sens de rotation du bouton.

L'élément fixe 11 comprend deux capteurs 13 et 14 et l'élément mobile 10 comprend une succession de marques 15 pouvant être détectées par les capteurs 13 et 14 lors du mouvement de l'élément mobile 10 par rapport à l'élément fixe 11. Les marques 15 sont par exemple des zones opaques montées sur un élément circulaire 16 pouvant tourner autour de l'axe 12 lors d'une manoeuvre d'un opérateur. Sur l'élément circulaire 16, les zones opaques 15 sont séparées par des zones transparentes 17 formant des absences de marques. Les marques 15 et les absences de marques 17 sont avantageusement régulièrement réparties autour l'axe 12. Les deux capteurs 13 et 14 sont par exemple des photodiodes montées sur un support 18 en forme de U. L'élément circulaire 16 se déplace entre les deux branches 19 et 20 du U. Les capteurs 13 et 14 sont disposés sur la branche 19 et des émetteurs, par exemple des diodes électroluminescentes sont disposés sur la branche opposée 20. Le support 18 est réalisé de telle sorte qu'un des capteurs 13 ou 14 ne puisse détecter la lumière émise que par un seul des émetteurs. De façon plus générale, les deux capteurs 13 et 14 détectent de façon séparée les différentes marques 15. Dans l'exemple représenté, les deux capteurs 13 et 14 sont disposés au voisinage l'un de l'autre sur un même support 18. D'autres dispositions sont envisageables, comme par exemple la réalisation de deux supports 18 placés de façon diamétralement opposée par rapport à l'axe 12 et portant chacun un capteur 13 ou 14.

Sur la figure 1, seules des parties essentielles des éléments 11 et 12 ont été représentées schématiquement. II est bien entendu que le codeur comprend d'autres pièces mécaniques comme par exemple un boitier formant l'élément fixe 11, un palier permettant à l'élément mobile 10 de tourner par rapport au boitier. Le codeur comprend également un bouton solidaire de l'élément circulaire 16. Le bouton est destiné à être manoeuvré par un opérateur utilisant le codeur pour saisir des données.

Des signaux émis par chacun des capteurs 13 et 14 sont transmis à un calculateur 25 par une liaison 26.

La figure 2 illustre un codage binaire issu des signaux émis par chacun des capteurs 13 et 14. Sur cette figure la succession des différents incréments du codeur lors du mouvement de l'élément mobile est représentée en abscisse. Cette représentation convient pour un codeur linéaire et également pour un codeur rotatif pour lequel les incréments s'enchainent de façon cyclique.

Dix incréments sont représentés sur la figure 2. Des codages binaires 31 et 32 issus de chacun des capteurs 13 et 14 sont associés à chaque incrément. Dans la pratique, les signaux issus des capteurs 13 et 14 ne présentent pas des fronts parfaits. Un filtrage adapté permet de reconstituer des fronts pour obtenir des codages binaires présentant des transitions aussi raides que possible. Entre deux incréments successifs du codeur seul un des codages binaires 31 ou 32 change de valeur binaire. Une distance séparant deux incréments forme un pas 33 du codeur. Cette distance peut être linéaire ou angulaire selon que le codeur est linéaire ou rotatif. Les distances séparant deux pas successifs sont avantageusement égales. Sur la figure 2, un pas 33 séparant les incréments 0 et 1 est représenté.

Autrement dit, le codage issu d'un capteur est déphasé par rapport au codage de l'autre capteur. Un changement de valeur binaire d'un des codages 31 et 32 définit le pas 33 du codeur. Les codages 31 et 32 forment un mot binaire.

Le codeur comprend par exemple une succession de 32 marques 15 séparées chacune par une absence de marque 17. Ces 32 marques permettent de définir 64 incréments du codeur. Ces incréments sont définis par la réalisation de l'élément circulaire 16 et du support 18 associé. Un intérêt de l'invention est de permettre la réutilisation de l'élément circulaire 16 et du support 18 pour des codeurs comprenant moins d'incréments, par exemple 16 ou 32. Pour ce faire, le codeur conserve le nombre d'incréments maximum et il comporte des moyens pour définir des positions stables en nombre inférieur aux nombre incréments total. Le nombre de positions stables est un sous multiple du nombre d'incréments. Autrement dit, un pas 34 entre positions stables est un multiple du pas 33 entre incréments. Sur la figure 2, les positions stables sont obtenues pour chaque incrément pair. Le pas 34 entre positions stables est égal à deux fois le pas 33 entre incréments.

Les moyens pour définir des positions stables comprennent, par exemple, pour un codeur rotatif, un disque solidaire de l'élément mobile 10 percé au pas 34, le disque étant centré sur l'axe 12 et perpendiculaire à celui ci. L'élément fixe 11 comprend une bille poussée par un ressort linéaire d'axe parallèle à l'axe 12. La bille peut pénétrer en partie dans chacun des trous du disque. Une position stable du codeur est obtenue chaque fois que la bille est dans un trou du disque. Pour modifier le nombre de positions stables du codeur, il suffit de changer le disque sans changer l'élément circulaire 16. De façon plus générale, les positions stables correspondent à des positions de crantage dans lesquels l'élément mobile 10 se positionne obligatoirement ; d'éventuelles positions intermédiaires étant instables. Le codeur bascule automatiquement vers la position stable la plus proche.

Sur la figure 2, chaque position stable est représentée schématiquement avec une bille 35 positionnée au niveau des incréments pairs.

Le codeur comprend des moyens pour définir une valeur de variation de positions stables du codeur à partir du mot binaire. La variation peut être positive ou négative. Le mot binaire peut être exprimé sur plusieurs bits par exemple 8 bits. La valeur du mot peut alors varier entre 0 et 255 Cette valeur est appelée valeur d'acquisition. Une autre valeur, dite valeur calculée, correspond à la variation du nombre de positions stables depuis la dernière acquisition.

Lors de son allumage, le mot correspondant à la position stable sur laquelle est codeur peut prendre n'importe quelle valeur entre 0 et 255. Pour obtenir un positionnement absolu par rapport la position initiale lors de l'allumage, le calculateur 25 affecte une valeur calculée 0 pour cette position initiale.

Prenons l'hypothèse d'un codeur à deux incréments entre deux positions stables et supposons que la valeur d'acquisition initiale soit 1. Un premier mouvement du codeur l'amène à une première position stable courante correspondant à une première acquisition courante de valeur 8. Dans la pratique la différence entre les deux acquisitions aurait du être un multiple du nombre d'incréments entre deux positions stables. Cette différence devrait être paire. Mais il peut se produire le cas où le codeur s'arrête entre deux position stables et donne une valeur d'acquisition distincte de celle des deux positions stables entourant sa position d'arrêt. Dans notre exemple, on suppose que la position initiale se situe entre deux positions stables.

Pour compter le nombre de positions stables passées lors du premier mouvement, on effectue l'opération suivante :
Tout d'abord une soustraction entre le mot binaire correspondant à la première acquisition courante moins l'acquisition initiale 1 : 8-1 =7. Ce résultat, divisé par le nombre d'incréments entre deux positions stables, 2 dans cet exemple, devient la nouvelle valeur calculée: 7/2=3. II s'agit en fait d'une division binaire qui ne tient pas compte des chiffres situés après la virgule. Ce qui correspondant à un déplacement de : +3 positions stables.

Ensuite on détermine une valeur de nouvelle acquisition que l'on mémorise pour le cycle d'acquisition suivant : On additionne à l'acquisition mémorisée au cycle précédent, c'est-à-dire l'acquisition initiale 1, deux fois la valeur calculée : 1 +(3x2) = 7.

Un second mouvement du codeur l'amène à une seconde position stable courante correspondant à une seconde acquisition courante de valeur 6. Ce second mouvement s'effectue en sens inverse du premier mouvement.

La soustraction entre la seconde acquisition et l'acquisition mémorisée au cycle précédent donne : 6-7=-1

Ensuite on divise ce résultat par le nombre d'incréments entre deux positions stables : -1/2=0.

Le déplacement correspondant à: -1 position stable n'est pas observé. Plus généralement, on constate qu'à chaque fois que l'on inverse le sens de déplacement de l'élément mobile 10, on obtient une erreur de comptage correspondant à une position stable qui n'est pas prise en compte. Ce raisonnement peut être extrapolé pour tout autre rapport entre le nombre de positions stables et le nombre d'incréments dès que l'acquisition initiale ne correspond pas à une position stable.

Pour pallier ce problème, l'invention prévoit de déterminer la partie entière de la division précédemment décrite. On entend par partie entière de la division l'entier immédiatement inférieur au résultat décimal de la division. Par exemple, si la division donne un résultat de 1,5 alors la partie entière de la division donne 1. Pour un exemple négatif, si la division donne un résultat de -1,5 alors la partie entière de la division donne -2.

La mise en oeuvre de l'invention ne nécessite que très peu d'emplacements mémoire, un emplacement pour le nombre d'incréments entre deux positions stables et un emplacement pour la dernière valeur calculée. La mémoire contenant ces deux informations porte le repère 38 sur la figure 1. Cette représentation est uniquement fonctionnelle et ne préjuge pas du type de composant utilisé. En effet, on peut distinguer le nombre d'incréments entre deux positions stables qui est une donnée figée pour un codeur. Cette donnée peut être stockée dans une mémoire morte, comme par exemple une mémoire dans laquelle est également stocké un programme exécuté par le calculateur 25. De plus le calculateur 25 et la mémoire morte peuvent appartenir à un même composant de type microcontrôleur. Par contre, la dernière valeur calculée est une information destinée à varier à chaque fois que le codeur est manoeuvré. II est donc avantageux de stocker cette information dans une mémoire vive ou au moins dans une mémoire réinscriptible.

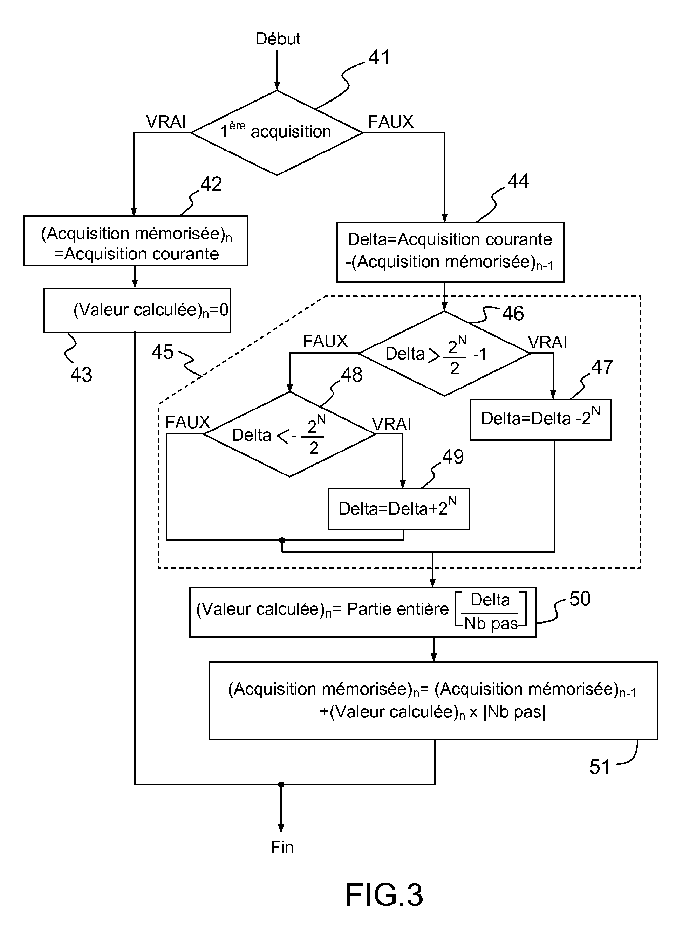

La figure 3 représente un organigramme mettant en oeuvre l'invention. Cet organigramme représente un cycle d'acquisition, c'est à dire une acquisition du mot binaire issu des capteurs 13 et 14 ainsi que les traitements associés à cette acquisition pour obtenir le nombre de positions stables que le codeur a parcouru depuis le cycle précédent correspondant à la précédente acquisition.

Une première étape est un test 41 permettant de vérifier si le codeur a déjà été manoeuvré depuis sa mise sous tension ou plus généralement depuis son démarrage. En cas de première acquisition, le résultat du test 41 est « VRAI » et l'acquisition courante est mémorisée dans un emplacement prévu pour mémoriser l'acquisition. Cet emplacement est noté (Acquisition mémorisée)ₙ, où n représente le rang du cycle de traitement par l'algorithme de la figure 3. Cette action de mémorisation est représentée au cadre 42. Ensuite, au cadre 43, on attribue 0 à la valeur calculée au rang n, ce qui correspond à la position initiale du codeur. A l'issu de l'étape 43, le cycle se termine.

Lors d'un cycle suivant, le résultat du test 41 est « FAUX » et le test 41 est suivi d'une étape 44 au cours de laquelle on calcule une différence « Delta » entre l'acquisition courante et l'acquisition mémorisée au cycle précédent et notée (Acquisition mémorisée)ₙ₋₁.

Ensuite dans un groupe d'étapes 45, on ramène avantageusement la différence Delta à l'intérieur d'une fourchette probable. Plus précisément, le mot binaire, regroupant les codages issus des deux capteurs 13 et 14, est codé sur N bits, par exemple 8 bits, ce qui représente 256 valeurs possibles. A cet effet, le codeur comprend une mémoire permettant de coder les mots binaires sur N bits. Si entre deux acquisitions successives, on passe par la valeur 0, la différence ne sera pas représentative du nombre de positions stables réellement parcourues entre les deux acquisitions. Pour pallier ce problème, le codeur comprend des moyens pour ramener la différence à une valeur inférieure à 2^{N}/2 en valeur absolue au modulo 2^{N}. On considère en effet, qu'une différence Delta supérieure à 2^{N}/2 en valeur absolue n'est pas possible, ce qui correspondrait à plusieurs tours de codeur effectué entre deux cycles. Dans la pratique un cycle d'acquisition peut être réalisé en quelques dizaines de millisecondes et se répéter avec cette période, ce qui rend impossible la réalisation de plusieurs tours entre deux acquisitions. Un exemple de réalisation de ce groupe d'étapes 45 est donné sur la figure 3.

Après l'étape 44, lors d'un test 46, on compare Delta à (2^{N}/2)-1. Si Delta est supérieur à (2^{N}/2)-1, on retranche à Delta : 2^{N}. Cette soustraction se fait à l'étape 47. Si par contre Delta n'est pas supérieur à (2^{N}/2)-1, on effectue un nouveau test 48 où on compare Delta à -2^{N}/2. Si Delta, est inférieur à -2^{N}/2 on ajoute 2^{N} à Delta. Cette addition s'effectue à l'étape 49. Si Delta, n'est pas inférieur à -2^{N}/2 on conserve la valeur de Delta obtenue à l'étape 44.

A l'issu du groupe d'étapes 45, où on a éventuellement corrigé la valeur de Delta, on détermine lors d'une étape 50, le nombre de positions stables séparant l'acquisition courante au présent cycle de l'acquisition courante au cycle d'acquisition précédent. Ce nombre de positions stables, noté (Valeur calculée)ₙ est un entier relatif, c'est-à-dire pouvant être positif ou négatif. La valeur calculée est égale à la partie entière de la division de la différence, déterminée à l'étape 44 puis éventuellement corrigée au groupe d'étapes 45, par le nombre de pas entre deux positions stables.

Enfin lors d'une étape 51, on détermine une nouvelle acquisition mémorisée pour le présent cycle. Cette acquisition mémorisée sera utilisée pour le prochain cycle d'acquisition. Plus précisément, l'acquisition mémorisée pour le présent cycle, notée (Acquisition mémorisée)ₙ est égale à l'acquisition mémorisée pour le cycle précédent, notée (Acquisition mémorisée)ₙ₋₁ à laquelle on ajoute la valeur calculée à l'étape 50 multipliée par la valeur absolue du nombre de pas.

On a vu précédemment que le nombre de pas du codeur correspond au nombre d'incréments du codeur entre deux positions stables. Dans la pratique afin de permettre une réutilisation facile d'un codeur pour plusieurs applications, on peut définir un nombre de pas positif ou négatif. Si par exemple lors d'une rotation du codeur dans le sens horaire, un nombre de pas positif correspond à un comptage positif de la valeur calculée à l'étape 50, la même rotation du codeur correspondra à un comptage négatif si le nombre de pas est négatif. En d'autres termes, le nombre de pas est signé et un chagement de signe permet d'inverser le comptage des positions stables.

## Revendications

1. Codeur incrémental comprenant un élément mobile (10) et un élément fixe (11), deux capteurs (13, 14) solidaires de l'élément fixe (11), une succession de marques (15) solidaires de l'élément mobile (10) pouvant être détectées par les capteurs (13, 14) lors du mouvement de l'élément mobile (10) par rapport à l'élément fixe (11), des moyens de codage binaire (31, 32) représentant la détection et l'absence de détection des marques (15) par les capteurs (13, 14), le codage issu d'un capteur étant déphasé par rapport au codage de l'autre capteur, un changement de valeur binaire d'un des codages définissant un pas du codeur, les codages formant un mot binaire, des positions stables du codeur étant définies par des multiples de pas du codeur, et des moyens (25) pour définir une valeur de variation de positions stables du codeur à partir du mot binaire, **caractérisé en ce qu'**il comprend une mémoire (38) contenant un nombre de pas entre deux positions stables et **en ce que** les moyens pour définir une position stable courante du codeur, calculent une différence entre un mot binaire obtenu pour une position stable courante et un mot binaire obtenu pour une position stable précédente, et calculent la valeur de variation de positions stables en déterminant la partie entière de la division de la différence par le nombre de pas entre deux positions stables.

2. Codeur incrémental selon la revendication 1, **caractérisé en ce qu'**il comprend une mémoire (38) permettant de coder les mots binaires sur N bits, et ce qu'il comprend des moyens (25) pour ramener la différence à une valeur inférieure à 2^{N}/2 en valeur absolue au modulo 2^{N}.

3. Codeur incrémental selon l'une des revendications précédentes, **caractérisé en ce que** le codeur est rotatif autour d'un axe (12) et **en ce que** les marques (15) et les absences de marques (17) sont régulièrement réparties autour l'axe (12).

4. Codeur incrémental selon l'une des revendications précédentes, **caractérisé en ce que** le nombre de pas est signé.

5. Procédé de détermination d'une valeur de variation de positions stables d'un codeur comprenant un élément mobile (10) et un élément fixe (11), deux capteurs (13, 14) solidaires de l'élément fixe (11), une succession de marques (15) solidaires de l'élément mobile (10) pouvant être détectées par les capteurs (13, 14) lors du mouvement de l'élément mobile (10) par rapport à l'élément fixe (11), des moyens de codage binaire (31, 32) représentant la détection et l'absence de détection des marques (15) par les capteurs (13, 14), le codage issu d'un capteur étant déphasé par rapport au codage de l'autre capteur, un changement de valeur binaire d'un des codages définissant un pas du codeur, les codages formant un mot binaire, des positions stables du codeur étant définies par des multiples de pas du codeur, **caractérisé en ce qu'**il consiste à :
• calculer une différence (44) entre un mot binaire obtenu pour une position stable courante et un mot binaire obtenu pour une position stable précédente,
• diviser (50) la différence par le nombre de pas entre deux positions stables,
• déterminer la partie entière (50) du résultat de la division.

6. Procédé selon la revendication 5, **caractérisé en ce que** les mots binaires sont codés sur N bits, **en ce que** si la différence est supérieure à 2^{N}/2 alors on retranche (47) 2^{N} à la différence avant d'effectuer la division (50) et **en ce que** si la différence est inférieure à 2^{N}/2 alors on ajoute (49) 2^{N} à la différence avant d'effectuer la division (50).

## Patentansprüche

1. Inkrementaler Codierer, der Folgendes umfasst: ein bewegliches Element (10) und ein festes Element (11), zwei in das feste Element (11) integrierte Sensoren (13, 14), eine in das bewegliche Element (10) integrierte Folge von Markierungen (15), die von den Sensoren (13, 14) bei der Bewegung des beweglichen Elements (10) in Bezug auf das feste Element (11) erkannt werden können, binäre Codierungsmittel (31, 32), die die Erkennung und Nichterkennung von Markierungen (15) durch die Sensoren (13, 14) repräsentieren, wobei die Codierung von einem Sensor in Bezug auf die Codierung des anderen Sensors phasenverschoben ist, wobei eine Änderung des binären Wertes von einer der Codierungen einen Schritt des Codierers definiert, wobei die Codierungen ein binäres Wort bilden, wobei Raststellungen des Codierers durch mehrere Schritte des Codierers definiert werden, und Mittel (25) zum Definieren eines Änderungswertes von Raststellungen des Codierers auf der Basis des binären Wortes, **dadurch gekennzeichnet, dass** er einen Speicher (38) umfasst, der eine Anzahl von Schritten zwischen zwei Raststellungen enthält, und dadurch, dass die Mittel zum Definieren einer laufenden Raststellung des Codierers eine Differenz zwischen einem für eine laufende Raststellung erhaltenen binären Wort und einem für eine vorhergehende Raststellung erhaltenen binären Wort berechnen und den Änderungswert von stabilen Positionen unter Ermittlung des gesamten Teils der Division der Differenz durch die Anzahl von Schritten zwischen zwei Raststellungen berechnen.

2. Inkrementaler Codierer nach Anspruch 1, **dadurch gekennzeichnet, dass** er einen Speicher (38) umfasst, der die Codierung der binären Wörter auf N Bits umfasst, und dadurch, dass er Mittel (25) zum Bringen der Differenz auf einen Wert unter 2^{N}/2 als absoluten Wert modulo 2^{N} umfasst.

3. Inkrementaler Codierer nach einem der vorherigen Ansprüche, **dadurch gekennzeichnet, dass** der Codierer um eine Achse (12) rotiert, und dadurch, dass die Markierungen (15) und die Markierungsfehlstellen (17) gleichmäßig um die Achse (12) verteilt sind.

4. Inkrementaler Codierer nach einem der vorherigen Ansprüche, **dadurch gekennzeichnet, dass** die Anzahl von Schritten ein Vorzeichen hat.

5. Verfahren zum Ermitteln eines Änderungswertes von Raststellungen eines Codierers, der Folgendes umfasst: ein bewegliches Element (10) und ein festes Element (11), zwei in das feste Element (11) integrierte Sensoren (13, 14), eine in das bewegliche Element (10) integrierte Folge von Markierungen (15), die von den Sensoren (13, 14) bei der Bewegung des beweglichen Elements (10) in Bezug auf das feste Element (11) erkannt werden können, binäre Codierungsmittel (31, 32), die die Erkennung und Nichterkennung von Markierungen (15) durch die Sensoren (13, 14) repräsentieren, wobei die Codierung von einem Sensor in Bezug auf die Codierung des anderen Sensors phasenverschoben ist, wobei eine Änderung des binären Wertes von einer der Codierungen einen Schritt des Codierers definiert, wobei die Codierungen ein binäres Wort bilden, wobei Raststellungen des Codierers durch mehrere Schritte des Codierers definiert werden, **dadurch gekennzeichnet, dass** es die folgenden Schritte beinhaltet:
• Berechnen einer Differenz (44) zwischen einem von einer laufenden Raststellunng erhaltenen binären Wort und einem für eine vorherige Raststellung erhaltenen binären Wort,
• Dividieren (50) der Differenz durch die Anzahl von Schritten zwischen zwei Raststellungen,
• Ermitteln des ganzen Teils (50) des Ergebnisses der Division.

6. Verfahren nach Anspruch 5, **dadurch gekennzeichnet, dass** die binären Worte auf N Bits codiert werden, dadurch, dass, wenn die Differenz größer als 2^{N}/2 ist, 2^{N} auf die Differenz vor dem Durchführen der Division (50) reduziert (47) wird, und dadurch, dass, wenn die Differenz kleiner als 2^{N}/2 ist, vor dem Durchführen der Division (50) 2^{N} zur Differenz addiert (49) wird.

## Claims

1. Incremental coder comprising a movable element (10) and a fixed element (11), two sensors (13, 14) secured to the fixed element (11), a succession of marks (15) secured to the movable element (10) that can be detected by the sensors (13, 14) during the motion of the movable element (10) with respect to the fixed element (11), means of binary coding (31, 32) representing the detection and the absence of detection of the marks (15) by the sensors (13, 14), the coding arising from one sensor being phase-shifted with respect to the coding of the other sensor, a change of binary value of one of the codings defining an interval of the coder, the codings forming a binary word, stable positions of the coder being defined by multiples of the coder interval, and means (25) for defining a value of variation of stable positions of the coder on the basis of the binary word, **characterized in that** it comprises a memory (38) containing a number of intervals between two stable positions and **in that** the means for defining a current stable position of the coder compute a difference between a binary word obtained for a current stable position and a binary word obtained for a previous stable position, and compute the value of variation of stable positions by determining the integer part of the division of the difference by the number of intervals between two stable positions.

2. Incremental coder according to Claim 1, **characterized in that** it comprises a memory (38) making it possible to code the binary words on N bits, and that it comprises means (25) for reducing the difference to a value less than 2^{N}/2 in absolute value to modulo 2^{N}.

3. Incremental coder according to one of the preceding claims, **characterized in that** the coder is rotary about an axis (12) and **in that** the marks (15) and the absences of marks (17) are regularly distributed around the axis (12).

4. Incremental coder according to one of the preceding claims, **characterized in that** the number of intervals is signed.

5. Method for determining a value of variation of stable positions of a coder comprising a movable element (10) and a fixed element (11), two sensors (13, 14) secured to the fixed element (11), a succession of marks (15) secured to the movable element (10) that can be detected by the sensors (13, 14) during the motion of the movable element (10) with respect to the fixed element (11), means of binary coding (31, 32) representing the detection and the absence of detection of the marks (15) by the sensors (13, 14), the coding arising from one sensor being phase-shifted with respect to the coding of the other sensor, a change of binary value of one of the codings defining an interval of the coder, the codings forming a binary word, stable positions of the coder being defined by multiples of the coder interval, **characterized in that** it consists in:
• computing a difference (44) between a binary word obtained for a current stable position and a binary word obtained for a previous stable position,
• dividing (50) the difference by the number of intervals between two stable positions,
• determining the integer part (50) of the result of the division.

6. Method according to Claim 5, **characterized in that** the binary words are coded on N bits, **in that** if the difference is greater than 2^{N}/2, then 2^{N} is deducted (47) from the difference before performing the division (50) and **in that** if the difference is less than 2^{N}/2, then 2^{N} is added (49) to the difference before performing the division (50).
